# DEMANDE DE BREVET EUROPEEN

(11) **EP 2 053 018 A1**
(43) Date de publication de la demande: **29.04.2009**
(21) Numéro de dépôt: 08167150.5
(22) Date de dépôt: 21.10.2008
(51) Int. Cl.: C01B 6/15, C01B 3/06

(54) **Mousse de borohydrure(s) ; procédé de production ; procédé de génération d'hydrogène utilisant ladite mousse.**

(30) Priorité: 22.10.2007 FR 0758471
(71) Demandeur: SNPE Matériaux Energétiques, 75004 Paris (FR)
(72) Inventeur: Renouard, Joël, 77630 Saint Martin en Biere (FR)
(74) Mandataire: Le Roux, Martine

(57) **Abrégé**

La présente invention a pour objet :
- une mousse solide d'au moins un borohydrure de métal alcalin ou alcalino-terreux ;
- un procédé de production d'une telle mousse ;
- un procédé de génération d'hydrogène par hydrolyse d'une telle mousse.

## Description

La présente invention a pour objet :
- un nouveau matériau : une mousse solide d'au moins un borohydrure de métal alcalin ou alcalino-terreux ; ladite mousse pouvant aussi renfermer une matière catalytique ;
- un procédé de production de ce matériau ;
- l'utilisation de ce matériau pour générer de l'hydrogène par hydrolyse ; en d'autres termes, un procédé de génération d'hydrogène par hydrolyse dudit matériau.

Ce nouveau matériau trouve notamment application en tant que combustible pour les piles à combustible. Plus particulièrement, dans le cadre de cette application, la présente invention concerne les piles à combustible destinées à l'alimentation électrique d'appareils électriques ou électroniques portables, c'est-à-dire d'appareils nécessitant une puissance électrique faible. Ladite présente invention peut cependant trouver également application pour alimenter en hydrogène des piles à combustible de puissances supérieures.

L'un des modes de production d'hydrogène connu consiste à hydrolyser des borohydrures, sous forme solide ou liquide, comme le borohydrure ou tétrahydroborate de sodium NaBH₄, mis en solution et mis en contact avec une matière catalytique à l'état solide. La réaction d'hydrolyse d'un tel borohydrure s'opère sous certaines conditions selon le schéma réactionnel suivant :

M(BH₄)n + 2nH₂O ---> M[B(OH)₄]n + 4nH₂

où M est un élément alcalin ou alcalinoterreux et n est un nombre entier positif égal au nombre d'électrons de valence de l'élément M. Cet élément M peut donc, par exemple, être du sodium (Na), auquel cas le nombre n est égal à 1, ce qui conduit au schéma réactionnel suivant :

NaBH₄ + 2H₂O ---> NaB(OH)₄ + 4H₂.

L'élément M peut aussi être constitué par du potassium (K), du lithium (Li) ou un autre élément approprié.

Selon ce schéma réactionnel, le borohydrure de sodium, couramment utilisé, génère quatre moles d'hydrogène en réagissant avec deux moles d'eau.

En général, on utilise une solution aqueuse de borohydrure de sodium et, pour faciliter la réaction, des catalyseurs. Cette solution aqueuse est mise en contact avec une matière catalytique ; typiquement, elle passe sur un lit catalytique, afin de générer l'hydrogène. Le contrôle du débit de la solution de borohydrure permet de contrôler la réaction. Néanmoins, on a constaté qu'un tel mode de génération d'hydrogène présente un rendement assez faible ; le rendement étant ici défini comme le rapport de la masse d'hydrogène générée à la masse de combustible mise en oeuvre. En effet, l'utilisation d'une solution de borohydrure présente un inconvénient majeur pour l'application aux piles à combustible, en particulier celle destinées aux appareils portables : la solubilité dans l'eau du borohydrure de sodium et de son produit de réaction est relativement faible.

Ainsi, il faut environ 3,8 moles d'eau pour solubiliser une mole de borohydrure de sodium (NaBH₄) et 13,3 moles d'eau pour solubiliser une mole du produit de réaction (NaBO₂). La quantité d'eau à utiliser pour obtenir, soit une solution de borohydrure de sodium, soit une solution dans laquelle le produit de réaction est soluble, est donc bien supérieure à la quantité d'eau nécessaire à la simple réaction d'hydrolyse.

Par conséquent, le rendement réel de génération d'hydrogène est plus faible que le rendement théorique (10,8%). Il serait ainsi d'environ 7% si la solution solubilisait uniquement le borohydrure de sodium (NaBH₄), mais il est de l'ordre de 3% seulement car la solution solubilise ledit borohydrure de sodium (NaBH₄) et le produit de réaction (NaBO₂). Il n'existe donc pas à l'heure actuelle de générateur d'hydrogène à base de solution de borohydrure de sodium, capable de travailler avec des rendements supérieurs à 4%.

En outre, il convient de remarquer que, de façon générale, les solutions de borohydrure ne sont pas stables dans le temps : elles s'hydrolysent en générant de l'hydrogène (H₂), ce qui s'avère gênant pour le stockage.

Afin de se rapprocher du rendement théorique et d'élever la densité d'énergie du combustible, il est donc préférable d'utiliser uniquement la quantité d'eau stoechiométrique nécessaire à la réaction de génération d'hydrogène. Pour cela, il a été envisagé de mettre en oeuvre des borohydrures sous forme solide, en particulier à l'état divisé, c'est-à-dire sous forme pulvérulente. L'hydrogène est alors généré par addition de borohydrure solide à une solution aqueuse, contenant de préférence une matière catalytique.

Cependant, il est difficile de contrôler une telle réaction et, partant, le débit d'hydrogène généré. En effet, ce type de réaction hétérogène, c'est-à-dire mettant en jeu des réactifs à l'état liquide et à l'état solide, est difficile à contrôler, car il implique des mécanismes de diffusion, en l'occurrence la diffusion de l'eau vers le borohydrure. Or de tels mécanismes de diffusion dépendent fortement de la porosité du milieu réactif, qui elle-même, varie au cours de l'avancement de la réaction, du fait de la formation de sous-produits plus ou moins compacts.

Des travaux ont été effectués pour tenter d'améliorer la diffusion de l'eau dans les substrats de borohydrure catalysés. Des matériaux découlant de ces travaux permettent de mieux contrôler la cinétique de réaction, donc le débit d'hydrogène généré, et en outre de limiter la formation d'une couche passivante. Il s'agit de borohydrures se présentant sous forme de poudres dont les grains sont recouverts, en tout ou partie, de matière catalytique, ou contiennent, ou sont intimement mélangés avec, des particules de matière catalytique.

Le brevet US 6,746,496 décrit ainsi des poudres micro-dispersées de particules de borohydrure contenant un catalyseur de réaction. La demande de brevet FR 2 892 111 décrit elle une poudre de borohydrure dont les grains sont recouverts en tout ou partie par des particules de matière catalytique. Lesdits grains recouverts sont obtenus à partir d'une part, d'une suspension de grains de poudre ("vierges") et d'autre part, d'une solution renfermant en solution un sel ou alliage ou oxyde d'au moins un métal, noble ou non noble. Lesdits grains de poudre "vierges" présentent une surface spécifique entre 0,5 et 100 m².g⁻¹, avantageusement entre 1 et 10 m².g⁻¹. La gestion et l'incidence de la granulométrie et de la surface spécifique des grains (d'une poudre) n'est en rien assimilable à la gestion et à l'incidence de la porosité et de la surface spécifique d'une mousse (voir ci-après). Une réaction, lorsque lesdites suspension et solution sont mises au contact à une température adéquate, en consommant de la poudre (NaBH₄, par exemple), réduit ledit sel, alliage ou oxyde (acétylacétonate de ruthénium, par exemple) et provoque la précipitation de particules dudit au moins un métal en surface des grains de poudre. Un tel procédé consomme donc de la poudre et ne saurait assurément garantir la taille des particules de matière catalytique déposées en surface, en surface seulement, des grains de poudre. La demande de brevet WO 2005/005311 traite de l'obtention de tablettes ou pastilles par compression de poudres de borohydrure catalysé (mélanges intimes obtenus par évaporation d'un solvant). La même demande de brevet WO 2005/005311 présente aussi des matériaux obtenus par dépôt de borohydrure (éventuellement catalysé) sur des supports (type matériau poreux ou mousse métallique ou organique).

Même s'il est reconnu que les matériaux ci-dessus conduisent à une cinétique d'hydrolyse mieux maîtrisée, cette dernière reste encore insuffisante, notamment en raison de la formation d'une couche passivante limitant la diffusion de l'eau dans le substrat.

La demande de brevet US 2007/020172 décrit un dispositif pour la génération d'hydrogène au sein duquel deux réactifs, maintenus au contact au travers d'une paroi poreuse, réagissent pour générer de l'hydrogène. La réaction en cause - premier réactif solide contenant de l'hydrogène (borohydrure de sodium, par exemple)/second réactif liquide (eau, par exemple) - est une réaction développée en surface du matériau solide. Ledit matériau solide est susceptible d'intervenir à l'état de poudres, de granulés, avantageusement à l'état de cylindres ou barreaux compressés. Il est aussi susceptible d'intervenir à l'état de mousses, de solides cellulaires ou équivalents. Ces matériaux poreux ne sont pas caractérisés. Il est indiqué :
- que leur porosité doit être suffisante pour recevoir un volume important d'hydrogène (ces matériaux sont en effet utilisés pour stocker l'hydrogène généré) ou pour permettre à l'hydrogène de passer à leur travers. L'homme du métier comprend qu'ils doivent donc présenter une surface spécifique importante (*i*.*e*. de "petits" pores) ;
- qu'ils peuvent être obtenus soit par action d'un gaz, avec variation de pression, soit par action d'un agent porogène susceptible de subir une réaction de décomposition chimique, thermique ou photolytique.

L'homme du métier est en fait toujours à la recherche d'un matériau solide, tel qu'un borohydrure, avantageusement catalysé, susceptible de conduire à une cinétique accélérée de génération d'hydrogène par hydrolyse.

Dans un tel contexte, la Demanderesse propose présentement un nouveau matériau, apte à générer de l'hydrogène par hydrolyse d'au moins un borohydrure, permettant de mieux contrôler la cinétique de réaction, donc le débit d'hydrogène généré, et en outre de limiter la formation d'une couche passivante.

Selon son premier objet, l'invention concerne un matériau consistant en une mousse d'au moins un borohydrure de métal alcalin ou alcalino-terreux ; ladite mousse présentant une surface spécifique comprise entre 1,5 m².g⁻¹ et 10 m².g⁻¹.

L'(les) élément(s) constitutif(s) dudit matériau n'est (ne sont) pas *per se* original(aux) : au moins un borohydrure d'un métal alcalin ou alcalino-terreux, généralement un borohydrure d'un métal alcalin ou un borohydrure d'un métal alcalino-terreux ; les mélanges d'au moins deux borohydrures alcalins, d'au moins deux borohydrures alcalino-terreux, voire d'au moins un borohydrure alcalin et d'au moins un borohydrure alcalino-terreux (mélanges mixtes) n'étant toutefois nullement exclus. Ce qui est original, c'est la forme dudit matériau. De façon caractéristique, le(s)dit(s) élément(s) constitutif(s) a(ont) été conditionné(s) en une mousse solide présentant une surface spécifique telle qu'indiquée ci-dessus.

Le matériau de l'invention est nouveau en ce qu'il s'agit d'une mousse solide présentant une telle surface spécifique. Cette notion de mousse solide est familière à l'homme du métier, dans des contextes différents de celui de l'invention. On entend par mousse solide dans lesdits contextes, et donc dans la présente description et les revendications annexées, un matériau solide homogène à fortes porosité et surface spécifique. Dans le cadre de la présente invention, la surface spécifique de ladite mousse est supérieure à 1,0 m².g⁻¹ (il s'agit d'une mousse) : elle est comprise entre 1,5 m².g⁻¹ et 10 m².g⁻¹. Il s'agit d'une porosité ouverte, libre, bien qu'il ne soit pas exclu que certains pores soient fermés.

La notion de surface spécifique, plus particulièrement employée pour caractériser un matériau, à l'état de poudre ou de mousse, est familière à l'homme du métier. Elle est classiquement déterminée par la méthode BET (voir plus loin).

Les valeurs de surface spécifique énoncées ci-dessus pour les mousses de l'invention sont suffisamment élevées pour caractériser des mousses mais ne sont, en tout état de cause, pas très élevées (pour des mousses). Ainsi, les mousses de l'invention renferment-elles des pores suffisants gros (au vu desdites valeurs de surface spécifique) pour permettre une pénétration aisée du réactif d'hydrolyse au sein desdites mousses (la réaction d'hydrolyse se développe dans le volume desdites mousses), pour optimiser la réaction borohydrure(s)/réactif d'hydrolyse au sein desdites mousses. Les mousses de l'invention offrent en fait un optimum en termes de surface réactive (globale) et d'accessibilité à ladite surface réactive.

Avantageusement, en référence au matériau constitutif de la mousse solide de l'invention, un seul alcalin ou alcalino-terreux est en cause et il est choisi dans le groupe comprenant le sodium (Na), le lithium (Li) et le magnésium (Mg). Le tétrahydroborate de sodium NaBH₄ est le plus avantageux, car il est facile à produire et peu coûteux.

Les poudres des borohydrures de base (matières premières utiles à l'obtention des mousses de l'invention : voir le procédé d'obtention décrit ci-après) présentent généralement une surface spécifique comprise entre 0,05 et 0,1 m²/g (l'homme du métier n'ignore pas que des valeurs aussi faibles dépendent du gaz absorbé pour la mise en oeuvre de la mesure). Les mousses de la présente invention ont une surface spécifique plus de 10 fois plus importante que celle desdites poudres des borohydrures de base (la mesure de surfaces spécifiques de cette ordre là est beaucoup moins dépendante de la nature du gaz absorbé). Il n'est toutefois pas exclu que des poudres de borohydrure, susceptibles d'être utilisées pour l'obtention de mousses de l'invention, présentent une surface spécifique plus élevée, et notamment une surface spécifique de l'ordre de celle indiquée pour les mousses de l'invention. La coïncidence de valeurs de surface spécifique (mousses/poudres) n'est que fortuite.

La mousse de borohydrure(s) de l'invention peut renfermer, en mélange intime avec (noyée dans) le(s)dit(s) borohydrure(s) (au sein de son(ses) élément(s) constitutif(s)), de la matière catalytique (des particules de matière catalytique) apte(s) à catalyser la réaction de génération d'hydrogène par hydrolyse du(des)dit(s) borohydrure(s). Cette matière catalytique, intervient évidemment en référence au débouché principal des mousses de l'invention, présenté dans l'introduction du présent texte. On note incidemment ici que les mousses de l'invention, catalysées ou non, peuvent avoir d'autres débouchés. Elles peuvent être utilisées dans d'autres contextes.

La granulométrie de ladite matière catalytique est aussi faible que possible. Les particules de matière catalytique consistent donc généralement en des nanoparticules qui présentent un diamètre médian compris entre 1 et 100 nm, avantageusement compris entre 3 et 5 nm. De telles nanoparticules permettent d'obtenir un mélange intime avec le borohydrure métallique. Leur procédé d'obtention est par exemple décrit dans la référence suivante : Petit C. ; Pileni M.P. " Nanosize cobalt boride particles: control of the size and properties", Journal of Magnetism and Magnetic Materials vol. 166, p. 82-90, 1997.

Les mousses catalysées de l'invention contiennent généralement de 0,5 % à 30 % en poids de matière catalytique, avantageusement au plus 10 %, très avantageusement entre 1 et 10 %.

Ladite matière catalytique, en mélange intime avec le(s)dit(s) borohydrure(s), peut être constituée par au moins un métal choisi dans le groupe comprenant le platine (Pt), le ruthénium (Ru), le palladium (Pd), le cobalt (Co), le nickel (Ni), le fer (Fe), l'or (Au), l'argent (Ag), le manganèse (Mn), le rhénium (Re), le rhodium (Rh), le titane (Ti), le vanadium (V) et le cérium (Ce), ou par au moins un alliage, ou sel ou oxyde d'au moins un desdits métaux. Ces matières présentent l'avantage de catalyser efficacement les réactions d'hydrolyse des borohydrures.

Avantageusement, le sel en cause est un chlorure, un borure ou un sel organométallique d'au moins un des métaux ci-dessus, et par exemple le borure de cobalt ou le borure de nickel, qui constituent tous deux de bons catalyseurs.

Les mousses de l'invention permettent de générer de l'hydrogène, en mettant en oeuvre une réaction hétérogène, solide - liquide, facilement contrôlable, quel que soit son degré d'avancement.

Selon son deuxième objet, l'invention concerne un procédé de production de telles mousses.

Ledit procédé comprend les étapes (de base) successives suivantes :
- la solubilisation, avec agitation, d'une poudre d'au moins un borohydrure de métal alcalin ou alcalino-terreux dans un solvant, solvant préférentiellement à bas point d'ébullition (en référence à la mise en oeuvre de son évaporation ultérieure), pour obtenir une solution,
- l'éventuel ajout de particules de matière catalytique non soluble dans ledit solvant, avantageusement de granulométrie nanométrique, pour l'obtention d'une suspension,
- le barbotage d'un gaz inerte (type Ar, N₂) dans ladite solution ou suspension maintenue sous agitation,
- l'évaporation du solvant, sans arrêter ni l'agitation ni le barbotage, jusqu'à l'obtention d'un matériau pâteux, puis
- le chauffage sous pression réduite dudit matériau pâteux pour le sécher et obtenir une mousse solide dudit au moins un borohydrure.

On conçoit que les propriétés (porosité, surface spécifique) de la mousse solide obtenue dépendent des conditions de mise en oeuvre du procédé d'obtention de ladite mousse et plus particulièrement des conditions de mise en oeuvre de l'agitation, du barbotage et de l'évaporation du solvant. La gestion de ces conditions, leur optimisation, en vue du résultat recherché (valeurs de surface spécifique) relève des connaissances de l'homme du métier.

En tout état de cause, il convient de souligner que l'agitation de la solution et le barbotage sont indispensables pour obtenir une mousse.

Le "bloc" de mousse obtenu peut évidemment être concassé pour générer des morceaux (plus petits) de mousse.

Pour obtenir une mousse de borohydrure(s) refermant de la matière catalytique, on met en oeuvre l'étape intermédiaire éventuelle précisée ci-dessus. Ainsi, le barbotage est-il mis en oeuvre dans une solution, en l'absence de matière catalytique, dans une suspension, en présence de matière catalytique.

L'homme du métier saura déterminer un solvant (solvant ou mélange de solvants) adapté à la mise en oeuvre du procédé ci-dessus, c'est-à-dire un solvant du(des) borohydrure(s) métallique(s) retenu(s), solvant dans lequel la matière catalytique qui intervient éventuellement est insoluble. On mentionne, par exemple, le solvant ammoniac liquide pour les couples borohydrure de sodium et chlorure ou borure métallique.

On comprend que le procédé de l'invention présente l'avantage d'être indépendant de la granulométrie du borohydrure (matière première), ledit borohydrure étant dissous dans la solution.

Pour ce qui concerne la granulométrie de la matière catalytique, elle revêt une importance certaine et dans le cadre du procédé de l'invention elle peut être optimisée sans difficultés. Elle est en effet parfaitement maîtrisable dans la mesure où ladite matière catalytique intervient à l'état solide (à l'état de particules) et reste en suspension (dans le même état solide, à l'état de particules).

On rappelle ici que les particules de matière catalytique présentent généralement un diamètre médian compris entre 1 et 100 nm, avantageusement compris entre 3 et 5 nm. De telles nanoparticules permettent d'obtenir un mélange intime avec le borohydrure métallique.

La présente invention concerne également un procédé de génération d'hydrogène par hydrolyse d'au moins une mousse de l'invention (mousse telle que décrite ci-dessus et/ou telle que produite par le procédé décrit ci-dessus). Ledit procédé est avantageusement mis en oeuvre pour l'alimentation (en hydrogène) d'une pile à combustible. Lorsque la mousse renferme de la matière catalytique, l'activation de la réaction d'hydrolyse ne nécessite aucun transport de catalyseur par la phase hydrolysante.

L'invention est ci-après illustrée par la description d'un mode de mise en oeuvre particulier du procédé (exemple) ainsi que par les figures annexées. L'objet de l'invention ne se limite cependant pas à ce mode de mise en oeuvre particulier et d'autres modes de mise en oeuvre du procédé sont évidemment possibles.

Les figures 1A, 1B, 1C montrent l'aspect, observé au microscope électronique à balayage (à différents grossissements), d'une poudre de borohydrure de sodium de base servant d'ingrédient (de matière première) pour la mise en oeuvre du procédé de l'invention.

Les figures 2A, 2B, 2C montrent une mousse, objet de l'invention, observée au microscope électronique à balayage, à différents grossissements.

Lesdites figures sont commentées dans l'exemple qui suit.

On présente, ci-dessous, un exemple pratique de mise en oeuvre du procédé - objet de l'invention - permettant de fabriquer une mousse - objet de l'invention - présentement une mousse de borohydrure de sodium renfermant une matière catalytique (borure de cobalt).

Dans ce mode de réalisation particulier, conforme au procédé objet de l'invention, le borohydrure de sodium, de formule NaBH₄ est dit sec, car il est préalablement déshydraté à 150°C sous vide primaire pendant 2 heures.

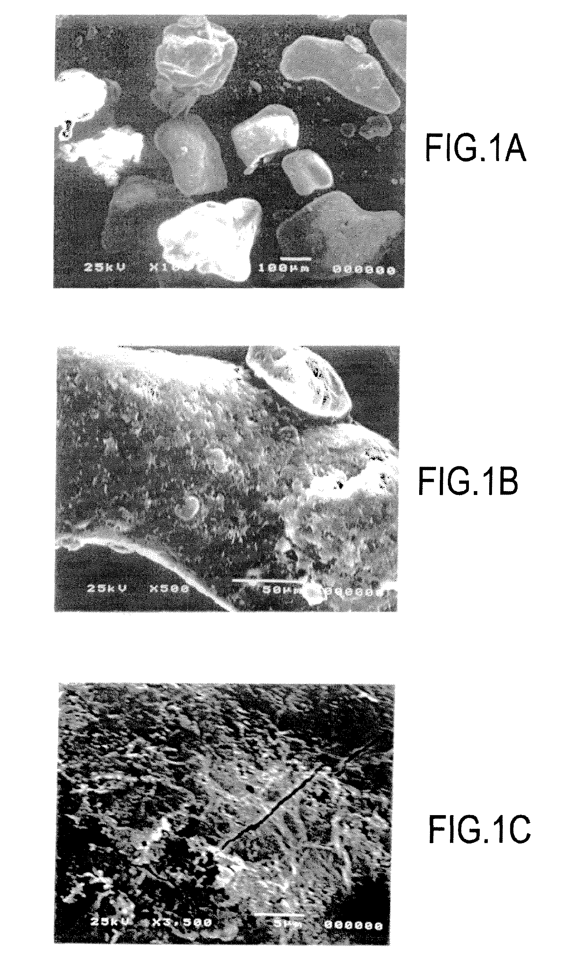

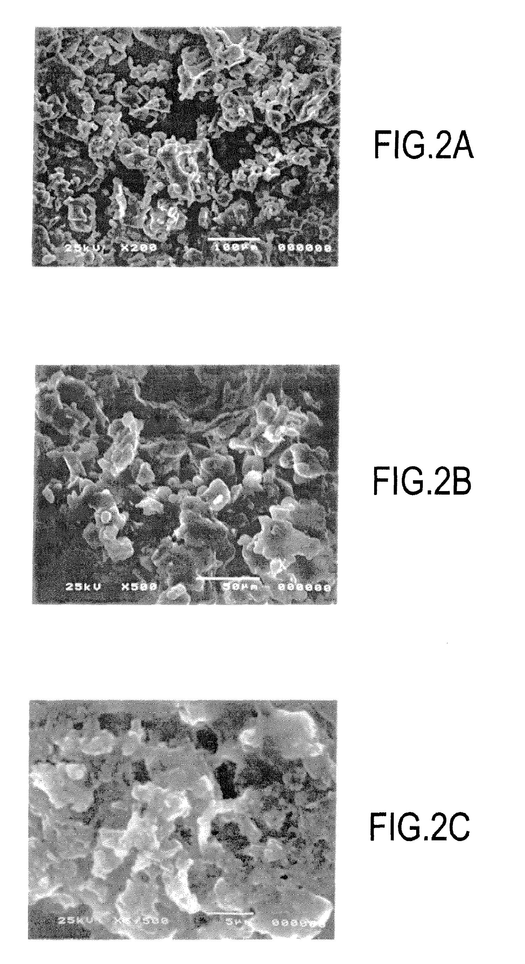

On rappelle que, dans le cadre du procédé de l'invention, la granulométrie ou surface spécifique du borohydrure (de départ) n'a pas d'importance puisque ledit borohydrure à vocation à être dissous. A titre de comparaison avec la mousse objet de l'invention obtenue en fin de procédé (voir les figures 2A, 2B et 2C), les figures 1A, 1B et 1C montrent des images de microscopie électronique à balayage, à différents grossissements, des grains typiques du borohydrure de sodium de base utilisé comme ingrédient. Il s'agit de grains denses de 50 à 200 µm environ, présentant une surface lisse. Ainsi, la poudre de borohydrure de sodium (NaBH₄) employée dans l'exemple décrit présente une surface spécifique de 0,08 m².g⁻¹.

Le procédé exemplifié comprend également la production des particules de matière catalytique, par réduction d'un sel ou d'un alliage ou d'un oxyde d'au moins un métal, selon des méthodes décrites dans la littérature.

La granulométrie des particules de matière catalytique (borure de cobalt, dans le présent exemple) est importante dans le cadre du procédé de l'invention, puisque ces particules restent en suspension dans le solvant (dans la suite du procédé) jusqu'à évaporation dudit solvant. On choisit avantageusement les plus petites granulométries possibles, i.e. des particules d'un diamètre médian préférentiellement inférieur à 100 nm, très préférentiellement inférieur à 10 nm (voir ci-dessus).

Dans une préparation typique, 100 ml d'ammoniac gazeux sont condensés dans un réacteur refroidi à -35°C et surmonté d'un piége à carboglace. Après liquéfaction de l'ammoniac, 5 g de borohydrure de sodium sec (0,132 mmol) sont introduits rapidement sous vigoureuse agitation (au moyen d'une turbine de Rushton à 6 pales, équipement bien connu de l'homme du métier), conduisant à la solubilisation totale du borohydrure. Une masse de borure de cobalt (de faible granulométrie) est ajoutée, correspondant à un taux de 10% de la masse de borohydrure introduite. Après l'introduction du catalyseur, un barbotage d'argon (débit de 20 l/min) est mis en oeuvre au moyen d'un tube capillaire plongeur dans la solution et la température est ramenée doucement jusqu'à l'ambiante (1°C/3min), ce qui entraîne l'évaporation de l'ammoniac. L'agitation est maintenue pendant toute la durée (environ 20 minutes) de l'évaporation de l'ammoniac. Lorsque le mélange devient pâteux dans le réacteur, le bullage d'argon et l'agitation sont arrêtés. Le milieu est alors mis sous pression réduite jusqu'à une pression de 10⁻² mbar et chauffé 8h à 60°C jusqu'à l'obtention d'un solide gris correspondant à la mousse de borohydrure formée renfermant la matière catalytique (mousse qui constitue un exemple de mousse conforme à la présente invention). Cette mousse se doit d'être stockée à l'abri de l'humidité.

Sa couleur grise témoigne de la présence des particules de la matière catalytique, en l'occurrence du borure de cobalt. L'analyse élémentaire confirme effectivement la présence de 10 % pondéral de borure de cobalt, en mélange intime avec (noyé dans) le borohydrure de sodium. Ladite analyse élémentaire ("ICP : Induction Couple Plasma") donne la composition pondérale ci-après : 54,7% de Na, 27% de B, 7,3% de Co et 11% de H₂.

De plus, conformément à la caractéristique principale de l'invention, le matériau obtenu se présente sous la forme d'une mousse à pores ouverts, comme le montrent les trois images obtenues par microscopie électronique à balayage, pour différents grossissements, montrées sur les figures 2A, 2B et 2C ; la surface spécifique (déterminée par la méthode BET, méthode de détermination de la surface spécifique se basant sur l'adsorption de gaz, azote ou krypton par exemple, à basse température, en monocouche sur la surface de l'échantillon à analyser) de ladite mousse étant de 1,61 m².g⁻¹ (et sa masse volumique est de 1,2 g.cm⁻³). Ces valeurs sont caractéristiques de l'état de mousse du matériau.

Il a été montré que la cinétique de production d'hydrogène (exprimée en µl de H₂/s) de la réaction d'hydrolyse mise en oeuvre sur la mousse du présent exemple est au moins 3,5 fois plus rapide que celle relevée par hydrolyse mise en oeuvre sur un simple mélange broyé des ingrédients de l'exemple.

Le matériau conforme à la présente invention permet de limiter la formation d'une couche passivante, c'est-à-dire d'une couche constituée des sous-produits de la réaction d'hydrolyse. En effet, les métaborates se formant par contact entre l'eau, le catalyseur et le tétrahydroborate de sodium se trouvent répartis à la surface de la mousse, et ainsi, ne constituent pas une couche continue et bloquante.

## Revendications

1. Mousse solide d'au moins un borohydrure de métal alcalin ou alcalino-terreux, **caractérisée en ce que** sa surface spécifique est comprise entre 1,5 m².g⁻¹ et 10 m².g⁻¹.

2. Mousse selon la revendication 1, **caractérisée en ce que** ledit métal est choisi dans le groupe comprenant le sodium (Na), le lithium (Li) et le magnésium (Mg).

3. Mousse selon la revendication 1 ou 2, **caractérisée en ce qu'**elle renferme des particules de matière catalytique apte à catalyser la réaction de génération d'hydrogène par hydrolyse dudit au moins un borohydrure.

4. Mousse selon la revendication 3, **caractérisée en ce que** lesdites particules présentent un diamètre médian compris entre 1 et 100 nm, avantageusement compris entre 3 et 5 nm.

5. Mousse selon la revendication 3 ou 4, **caractérisée en ce que** ladite matière catalytique représente entre 0,5 % et 30 % en poids, de préférence entre 1 et 10 % en poids, du poids total de ladite mousse.

6. Mousse selon l'une quelconque des revendications 3 à 5, **caractérisée en ce que** ladite matière catalytique est constituée par au moins un métal choisi dans le groupe comprenant le platine, le ruthénium, le palladium, le cobalt, le nickel, le fer, l'or, l'argent, le manganèse, le rhénium, le rhodium, le titane, le vanadium et le cérium, ou par au moins un alliage ou sel ou oxyde d'au moins un desdits métaux.

7. Mousse selon la revendication 6, **caractérisé en ce que** ledit sel est constitué par du borure de cobalt ou par du borure de nickel.

8. Procédé de production d'une mousse solide d'au moins un borohydrure de métal alcalin ou alcalino-terreux selon l'une quelconque des revendications 1 à 7, **caractérisé en ce qu'**il comprend :
- la solubilisation, avec agitation, d'une poudre d'au moins un borohydrure, de métal alcalin ou alcalino-terreux, dans un solvant, pour l'obtention d'une solution,
- l'éventuel ajout de particules de matière catalytique non soluble dans ledit solvant, avantageusement de granulométrie nanométrique, pour l'obtention d'une suspension,
- le barbotage d'un gaz inerte dans ladite solution ou suspension maintenue sous agitation,
- l'évaporation du solvant, sans arrêter ni l'agitation ni le barbotage, jusqu'à l'obtention d'un matériau pâteux, puis
- le chauffage sous pression réduite dudit matériau pâteux pour le sécher et obtenir ainsi une mousse solide.

9. Procédé selon la revendication 8, **caractérisé en ce que** lesdites particules de matière catalytique présentent un diamètre médian compris entre 1 et 100 nm, avantageusement compris entre 3 et 5 nm.

10. Procédé de génération d'hydrogène par hydrolyse d'au moins un borohydrure de métal alcalin ou alcalino-terreux, **caractérisé en ce que** ledit borohydrure est une mousse selon l'une quelconque des revendications 1 à 7 et/ou une mousse produite par le procédé selon la revendication 8 ou 9.

11. Procédé de génération d'hydrogène selon la revendication 10, **caractérisé en ce qu'**il est mis en oeuvre pour l'alimentation d'une pile à combustible.
